# EUROPÄISCHE PATENTSCHRIFT

(11) **EP 1 014 359 B1**
(45) Veröffentlichungstag und Bekanntmachung des Hinweises auf die Patenterteilung: **18.08.2004**
(21) Anmeldenummer: 99204263.0
(22) Anmeldetag: 13.12.1999
(51) Int. Cl.: G11B 17/22, G11B 17/26, G11B 17/30

(54) **Wechsler-Gerät für Informationsplatten**
Information disc-changer
Changeur de disques d'information

(30) Priorität: 22.12.1998 DE 19859493
(43) Veröffentlichungstag der Anmeldung: 28.06.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Hopf, Christian, Philips Corp. Intel. Prop. GmbH, 52064 Aachen (DE); Kunze, Norbert, Philips Corp. Intel. Prop. GmbH, 52064 Aachen (DE); Müller, Stefan, Philips Corp. Intel. Prop. GmbH, 52064 Aachen (DE); Rumpf, Horst, Philips Corp. Intel. Prop.GmbH, 52064 Aachen (DE); Wouters, C., Philips Corp. Intell. Property GmbH, 52064 Aachen (DE)
(74) Vertreter: Volmer, Georg, Dipl.-Ing.

(56) Entgegenhaltungen:
- EP-A- 0 833 324
- EP-A- 0 872 833
- PATENT ABSTRACTS OF JAPAN vol. 018, no. 429 (P-1785), 10. August 1994 (1994-08-10) & JP 06 131793 A (CLARION CO LTD), 13. Mai 1994 (1994-05-13)
- PATENT ABSTRACTS OF JAPAN vol. 1998, no. 08, 30. Juni 1998 (1998-06-30) & JP 10 064160 A (ALPINE ELECTRON INC), 6. März 1998 (1998-03-06)

## Beschreibung

Die Erfindung bezieht sich auf ein Wechsler-Gerät für Informationsplatten mit einer Lese/Schreibeinheit zum Lesen von auf einer Informationsplatte gespeicherten Informationen und/oder zum Schreiben von Informationen auf eine Informationsplatte und mit einer Stapeleinheit zum Stapeln von wenigstens zwei Informationsplatten in wenigstens zwei Stapelpositionen, wobei die Stapeleinheit Ablagefächer zur Ablage der Informationsplatten in Ablageebenen und einen ersten Transportmechanismus zum Transport der Ablagefächer in die Stapelpositionen aufweist, wobei die Ablagefächer jeweils zweiteilig ausgebildet sind mit einem Deckelteil und einem Bodenteil und wobei zum Transport der Informationsplatten innerhalb der Stapeleinheit die Deckelteile und die Bodenteile der Ablagefächer mittels des ersten Transportmechanismus gemeinsam in derselben Richtung verfahrbar sind

Ein derartiges Wechsler-Gerät ist aus der EP 833 324 bekannt.

Ein weiteres Wechsler-Gerät ist aus der EP 884 726 bekannt. Bei diesem bekannten Gerät ist innerhalb der Stapeleinheit eine Ladeposition vorgesehen, in die jeweils eines der Ablagefächer mittels Rotation einer Spindel überführbar ist. Zum Überführen der Informationsplatte in eine zum Abspielen vorgesehene Spielposition ist bei dem bekannten Gerät ein Transportmechanismus vorgesehen, mittels dessen eine zum Abspielen vorgesehene Informationsplatte aus dem sich in der Ladeposition befindlichen Ablagefach in die Spielposition transportierbar ist, wobei die Spielposition außerhalb der Stapeleinheit angeordnet ist. Für eine derartige außerhalb der Stapeleinheit liegende Spielposition muß bei der Konstruktion des bekannten Gerätes entsprechender Bauraum vorgesehen werden.

Es ist Aufgabe der Erfindung, ein anderes Gerät der eingangs genannten Art zu schaffen, welches insbesondere eine platzsparende Bauweise ermöglicht.

Diese Aufgabe ist erfindungsgemäß dadurch gelöst, daß zum überführen einer Informationsplatte in eine zum Abspielen und/oder Beschreiben der Informationsplatte vorgesehene Spielposition das Deckelteil und das Bodenteil des diese Informationsplatte lagernden Ablagefaches mittels des ersten Transportmechanismus relativ zueinander verfahrbar sind.

Unter Informationsplatten werden insbesondere optisch auslesbare Informationsträger wie CDs (Compact Disc) und DVDs (Digital Versatile Disc) verstanden. Erfindungsgemäß sind die Ablagefächer zweiteilig ausgebildet und mittels des ersten Transportmechanismus sowohl gemeinsam in derselben Richtung verfahrbar als auch relativ zueinander, insbesondere in entgegengesetzten Richtungen verfahrbar. Wenn die Deckelteile und die Bodenteile der Ablagefächer gemeinsam in derselben Richtung verfahren werden, so werden die dort abgelegten Informationsplatten von den Deckelteilen und den Bodenteilen der Ablagefächer geführt und können dadurch innerhalb der Stapeleinheit transportiert werden. Dabei findet keine Relativbewegung zwischen den Deckelteilen und den Bodenteilen statt, d.h. der Abstand zwischen den Deckelteilen und den Bodenteilen verändert sich nicht. Zum Abspielen einer Informationsplatte können das Deckelteil und das Bodenteil des diese Informationsplatte lagernden Ablagefaches relativ zueinander verfahren werden. Dies bedeutet, daß sich der Abstand zwischen dem oberen Deckelteil und dem unteren Deckelteil vergrößert. Vorteilhaft werden das Deckelteil und das Bodenteil des die zum Abspielen vorgesehene Informationsplatte lagernden Ablagefaches in entgegengesetzter Richtung transportiert, d.h. das Deckelteil nach oben und das Bodenteil nach unten. Der so entstehende Freiraum zwischen der Informationsplatte und dem Deckelteil und/oder zwischen der Informationsplatte und dem Bodenteil ermöglicht es, die Informationsplatte innerhalb der Stapeleinheit abzuspielen. Dies erfolgt vorzugsweise dadurch, daß die Lese/Schreibeinheit in die Stapeleinheit transportiert wird und die auf der Informationsplatte gespeicherten Informationen ausliest oder auch Informationen auf die Informationsplatte schreibt. Ein Transport der Informationsplatte in eine außerhalb der Stapeleinheit gelegene Spielposition ist nicht erforderlich und dementsprechend ist auch ein dafür vorgesehener Transportmechanismus nicht erforderlich. Das Abspielen der Informationsplatte direkt innerhalb der Stapeleinheit ermöglicht daher ein sehr kompaktes Gerät mit geringen Abmessungen. Dies ist insbesondere für Geräte vorteilhaft, welche für den Einsatz in Kraftfahrzeugen vorgesehen sind.

Die vorteilhafte Ausgestaltung der Erfindung gemäß Anspruch 2 ermöglicht eine besonders kompakte und platzsparende Bauweise.
Die vorteilhafte Ausgestaltung der Erfindung gemäß Anspruch 3 hat den Vorteil, daß die zum Abspielen vorgesehene Informationsplatte in der Stapeleinheit verbleiben kann und kein gesonderter Transportmechanismus zum Transport der Informationsplatte aus der Stapeleinheit in die Spielposition erforderlich ist.

Der zweite Transportmechanismus transportiert die Lese/Schreibeinheit von einer Nischenposition, die vorzugsweise außerhalb der Stapeleinheit angeordnet ist, in die Spielposition. Der zweite Transportmechanismus kann beispielsweise dadurch realisiert werden, daß die Lese/Schreibeinheit an einem Schwenkarm verschwenkbar gelagert ist und von der Nischenposition in die Spielposition verschwenkt wird. Alternativ ist es beispielsweise möglich, die Lese/Schreibeinheit verschiebbar an dem Chassisgehäuse des Wechsler-Gerätes anzuordnen und den Übergang von der Nischenposition in die Spielposition mittels einer Verschiebebewegung zu realisieren.

Die Lese/Schreibeinheit weist üblicherweise einen rotierbaren Plattenteller auf, auf welchen die Informationsplatte zum Abspielen aufgedrückt oder aufgeklemmt oder auf andere Art und Weise aufgebracht wird. Bei der vorteilhaften Ausgestaltung der Erfindung gemäß Anspruch 4 wird das Aufbringen der zum Abspielen vorgesehenen Informationsplatte auf den Plattenteller mittels des ersten Transportmechanismus realisiert. Hierzu wird zunächst die Lese/Schreibeinheit in die Stapeleinheit bewegt und der Plattenteller wird zentrisch zu der Stapellinie positioniert. Danach wird die zum Abspielen vorgesehene Informationsplatte mittels des ersten Transportmechanismus, d.h. geführt von dem zugeordneten Ablagefach, entlang der Stapellinie auf den Plattenteller gedrückt bzw. geklemmt.

Bei der vorteilhaften Ausgestaltung der Erfindung gemäß Anspruch 5 ist dagegen die Lese/Schreibeinheit selbst zum Drücken oder Klemmen der Informationsplatte auf den Plattenteller vorgesehen. Dies kann beispielsweise dadurch realisiert werden, daß die Lese/Schreibeinheit zunächst von der Nischenposition in die Stapeleinheit überführt wird und danach beispielsweise von unten gegen die in dem Ablagefach gehaltene, zum Abspielen vorgesehene Informationsplatte gedrückt wird. Alternativ sind auch andere Klemmmechanismen realisierbar.
Die vorteilhafte Ausgestaltung der Erfindung nach Anspruch 6 hat den Vorteil, daß die Informationsplatten einzeln in das Wechsler-Gerät eingeführt werden können und auch einzeln aus dem Wechsler-Gerät wieder entnommen werden können. Dies ist insbesondere bei Einbau des Wechsler-Gerätes in ein Armaturenbrett eines Kraftfahrzeuges vorteilhaft. Um eine Informationsplatte aus der Stapeleinheit in die Auswurfposition zu überführen, wird diese Informationsplatte mittels des ersten Transportmechanismus, d.h. mittels Führung durch das zugeordnete Ablagefach, zunächst in die Ladeposition der Stapeleinheit transportiert. Mittels des dritten Transportmechanismus wird diese Informationsplatte dann aus dem sich in der Ladeposition befindlichen Ablagefach entnommen und in die Auswurfposition transportiert. Der dritte Transportmechanismus kann beispielsweise mittels an Schwenkarmen angeordneten und mit Nuten versehenen Transporträdern realisiert werden, wie dies in der EP 742558 beschrieben ist.

Bei der vorteilhaften Ausgestaltung der Erfindung gemäß Anspruch 7 liegt die Spielposition seitlich versetzt zu der Stapellinie, d.h. die Informationsplatte muß zum Abspielen aus dem sich in der Ladeposition befindlichen Ablagefach entnommen und in die außerhalb der Stapeleinheit liegende Spielposition transportiert werden. Hierfür kann vorzugsweise der dritte Transportmechanismus verwendet werden. Dies ist besonders einfach und kostengünstig. Alternativ ist aber auch möglich, daß der zum Transport der Lese/Schreibeinheit vorgesehene zweite Transportmechanismus den Transport der zum Abspielen vorgesehenen Informationsplatte von der Ladeposition in die Spielposition übernimmt.

Bei der vorteilhaften Ausgestaltung nach Anspruch 8 ist ein vierter Transportmechanismus zum Transport der Lese/Schreibeinheit vorgesehen und mittels dieses vierten Transportmechanismus ist die Lese/Schreibeinheit zwischen der Ladeposition, der Spielposition und der Nischenposition transportierbar, wobei für den Transport einer Informationsplatte von der Ladeposition in die Spielposition die Informationsplatte auf den Plattenteller aufgebracht und ,von der Lese/Schreibeinheit geführt, zwischen der Ladeposition und der Spielposition transportierbar ist.

Die vorteilhafte Ausgestaltung der Erfindung gemäß Anspruch 9 stellt eine konstruktiv einfache Möglichkeit zur Realisierung des ersten Transportmechanismus dar. Vorzugsweise sind drei in einem Dreieck angeordnete Spindeln vorgesehen, welche ein Außengewinde aufweisen. In dieses Außengewinde greifen Elemente der Ablagefächer ein, wodurch es bei einer Rotation der Spindel zu einer Bewegung der Ablagefächer innerhalb der Stapeleinheit kommt. Bei der gemeinsamen Rotation des ersten und des zweiten Spindelteils sind das erste und das zweite Spindelteil vorzugsweise fomschlüssig gekoppelt, so daß keine Relativbewegung zwischen dem ersten und dem zweiten Spindelteil erfolgt. Der Formschluß zwischen dem ersten und dem zweiten Spindelteil wird dabei so ausgeführt, daß sich zwischen dem ersten Spindelteil und dem zweiten Spindelteil ein durchgehendes Gewinde ergibt. Die Rotation des ersten und des zweiten Spindelteils relativ zueinander kann einerseits dadurch realisiert werden, daß das erste und das zweite Spindelteil in entgegengesetzten Richtungen rotieren. Alternativ ist es auch möglich, daß nur das erste oder nur das zweite Spindelteil rotiert, während das zweite oder das erste Spindelteil fest steht.

Die Ausgestaltung der Erfindung gemäß Anspruch 10 ist konstruktiv besonders einfach. Gemäß Anspruch 10 wird eine zum Abspielen vorgesehene Informationsplatte zunächst zusammen mit dem sie führenden Ablagefach in die Trennebene überführt. Die Trennebene teilt das erste und das zweite Spindelteil. Zur gleichsinnigen Rotation des ersten und des zweiten Spindelteils werden das erste und das zweite Spindelteil im Bereich der Trennebene miteinander gekoppelt, insbesondere formschlüssig verbunden. Zur gegensinnigen bzw. relativ zueinander erfolgenden Rotation des ersten und des zweiten Spindelteils wird die Kopplung zwischen dem ersten und dem zweiten Spindelteil in der Trennebene aufgehoben, d.h. das erste und das zweite Spindelteil können relativ zueinander bewegt werden. Wenn sich das Ablagefach in der Trennebene befindet, ist das Deckelteil mit dem ersten Spindelteil gekoppelt und das Bodenteil ist mit dem zweiten Spindelteil gekoppelt. Werden das erste und das zweite Spindelteil nun in entgegengesetzter Richtung rotiert, so wirkt das erste Spindelteil auf das Deckelteil des Ablagefaches ein und bewegt dieses nach oben. Gleichzeitig wirkt das entgegengesetzt rotierende zweite Spindelteil auf das Bodenteil des Ablagefaches ein und bewegt dieses Bodenteil nach unten. Dadurch wird ein Freiraum zwischen der Informationsplatte und dem Deckelteil und dem Bodenteil des Ablagefaches geschaffen.

Das erfindungsgemäße Wechsler-Gerät ist besonders für den Einsatz in einem Armaturenbrett eines Fahrzeugs geeignet, da dort der zur Verfügung stehende Bauraum besonders beschränkt ist.

Einige schematisch dargestellte Ausführungsbeispiele der Erfindung werden nachfolgend anhand der Zeichnung in den Fig. 1 bis 12 näher erläutert. Es zeigen:
Fig. 1 eine Draufsicht auf ein Wechsler-Gerät für Infomationsplatten mit einer Stapeleinheit, mit einer Lese/Schreibeinheit in einer Nischenposition und mit einer Informationsplatte in einer Auswurfposition,
Fig. 2 in Seitenansicht eine zum Transport von nicht dargestellten Ablagefächern der Stapeleinheit vorgesehene Spindel, welche dreiteilig ausgebildet ist, wobei jedes der drei Teile mittels eines Transportmechanismus rotierbar ist,
Fig. 3 eine Seitenansicht der Spindel gemäß Fig. 2, wobei die Spindel mit fünf Ablagefächern gekoppelt ist und wobei sich eines der Ablagefächer in einer Trennebene zwischen dem oberen und dem unteren Spindelteil befindet,
Fig. 4 in Seitenansicht die Spindel gemäß Fig. 3, wobei mittels entgegengesetzter Rotation des oberen und des mittleren Spindelteils das Deckelteil und das Bodenteil des die Informationsplatte führenden Ablagefaches gegeneinander verfahren worden sind, so daß für die Informationsplatte ein Freiraum vorhanden ist.
Fig. 5 das Wechsler-Gerät gemäß Fig. 1 in Seitenansicht,
Fig. 6 das Wechsler-Gerät in Seitenansicht, wobei sich die Informationsplatte in einer Ladeposition befindet,
Fig. 7 das Wechsler-Gerät in Seitenansicht, wobei die Lese/Schreibeinheit in eine Spielposition geschwenkt ist,
Fig. 8 das Wechsler-Gerät in Seitenansicht, wobei die Informationsplatte mittels Herunterfahren des sie führenden Ablagefaches auf den Plattenteller der Lese/Schreibeinheit gedrückt ist,
Fig. 9 das Wechsler-Gerät in Seitenansicht, wobei sich die Informationsplatte auf dem Plattenteller der Lese/Schreibeinheit in der Spielposition befindet und wobei das Deckelteil und das Bodenteil des Ablagefaches von der sich auf dem Plattenteller befindlichen Informationsplatte weggefahren sind,
Fig. 10 das Wechsler-Gerät in Seitenansicht, wobei sich die Lese/Schreibeinheit in der Nischenposition befindet und wobei eine Informationsplatte in einem sich in einer Stapelposition befindlichen Ablagefach gestapelt ist und wobei sich ein zweites Ablagefach in der Ladeposition befindet,
Fig. 11 das Wechsler-Gerät in Seitenansicht gemäß Fig., wobei eine zweite Informationsplatte von der Auswurfposition in das sich in der Ladeposition befindliche Ablagefach transportiert ist,
Fig. 12 das Wechsler-Gerät in Seitenansicht gemäß, wobei alle fünf Ablagefächer mit jeweils einer Informationsplatte belegt sind,

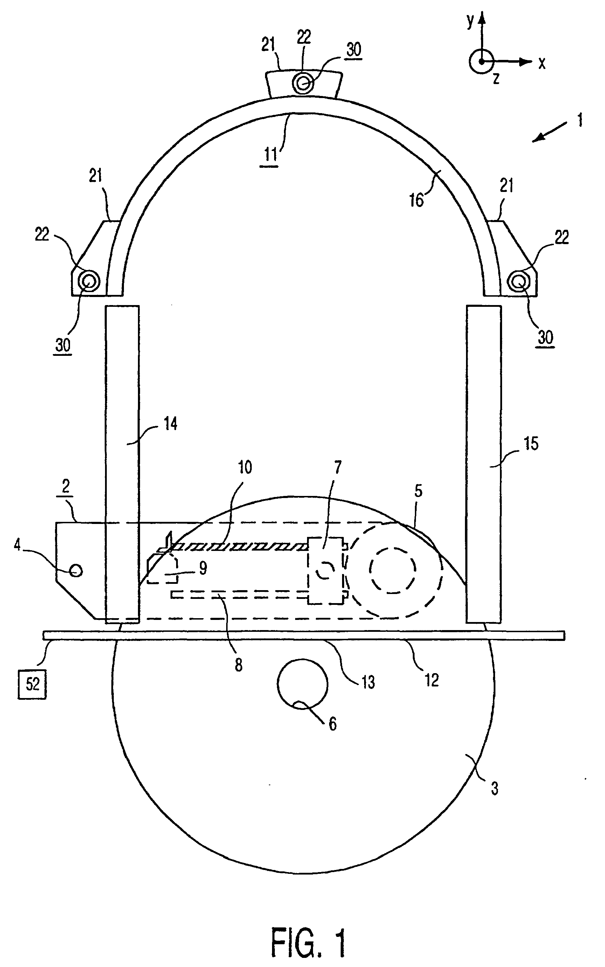

Fig. 1 zeigt in Draufsicht ein Wechsler-Gerät 1 mit einer Lese/Schreibeinheit 2 zum Lesen von auf einer Informationsplatte 3 gespeicherten Informationen oder zum Schreiben von Informationen auf die Informationsplatte 3. Die Lese/Schreibeinheit 2 ist schwenkbar um eine Schwenkachse 4 gelagert und weist einen Plattenteller 5 auf, welcher rotierend antreibbar ist mittels eines nicht näher dargestellten Antriebsmechanismus und welcher Mittel zum Klemmen der Informationsplatte 3 aufweist. Zum Verschwenken der Lese/Schreibeinheit 2 ist ein schematisch dargestellter zweiter Transportmechanismus 52 vorgesehen. Die Informationsplatte 3 weist zentrisch ein kreisförmiges Positionierloch 6 auf, mittels dessen die Informationsplatte 3 auf den Plattenteller 5 drückbar ist. Die Lese/Schreibeinheit 2 weist eine optische Abtasteinheit 7 auf, welche entlang einer Führungsschiene 8 mittels eines Spindelmotors 9 und einer Führungsspindel 10 linear bewegbar ist. Zur Stapelung mehrerer Informationsplatten in dem Wechsler-Gerät 1 ist eine Stapeleinheit 11 vorgesehen. Die Informationsplatte 3 gemäß Fig. 1 befindet sich in einer Auswurfposition, in welcher diese Informationsplatte aus dem Wechsler-Gerät 1 entnehmbar ist bzw. in welche die Informationsplatte 3 von der Hand einer Bedienperson in das Wechsler-Gerät 1 einführbar ist. Hierfür weist eine Frontplatte 12 des Wechsler-Gerätes 1 einen Einschubschlitz 13 auf. Zum Transport der Informationsplatte 3 von der Auswurfposition in die Stapeleinheit 11 sind als dritter Transportmechanismus ein linkes Transportelement 14 und ein rechtes Transportelement 15 vorgesehen. Das linke Transportelement 14 und das rechte Transportelement 15 können beispielsweise an Schwenkarmen befestigte Transporträder sein, welche mit zur Aufnahme des Plattenrandes der Informationsplatte 3 vorgesehene Nuten aufweisen. Ein derartiger Transportmechanismus ist in der EP 742558 näher beschrieben.

Die Stapeleinheit 11 ist zum Stapeln von fünf Informationsplatten 3 vorgesehen. Hierzu weist die Stapeleinheit 11 fünf Ablagefächer 16 bis 20 auf, von denen in Fig. 1 nur das oberste Ablagefach 16 erkennbar ist. Zum Transport der Ablagefächer 16 bis 20 in einer vertikalen z-Richtung sind als erster Transportmechanismus drei Spindeln 30 vorgesehen, welche ein in Fig. 1 nicht erkennbares Außengewinde aufweisen. Das obere Ablagefach 16 weist drei Flansche 21 auf, welche jeweils ein die Spindeln 30 umschließendes Loch 22 aufweisen.

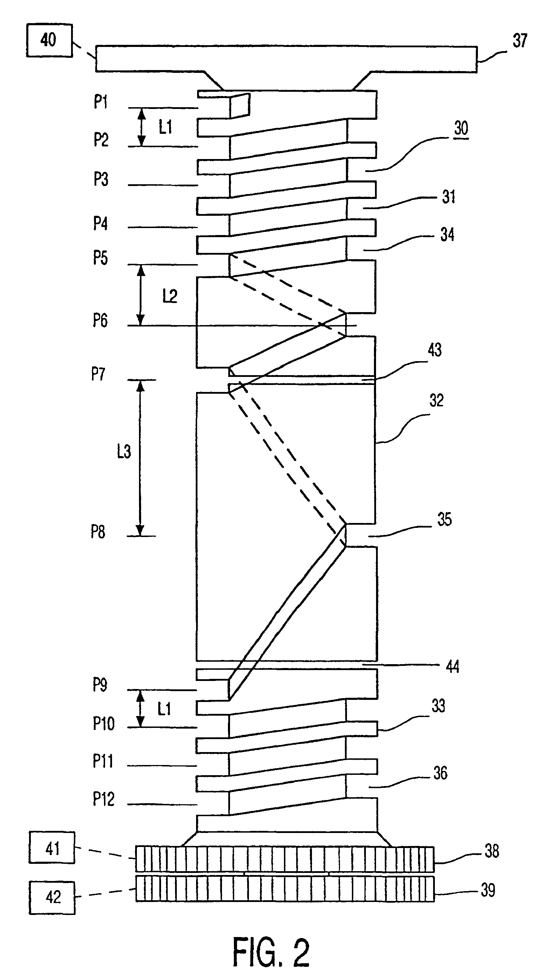

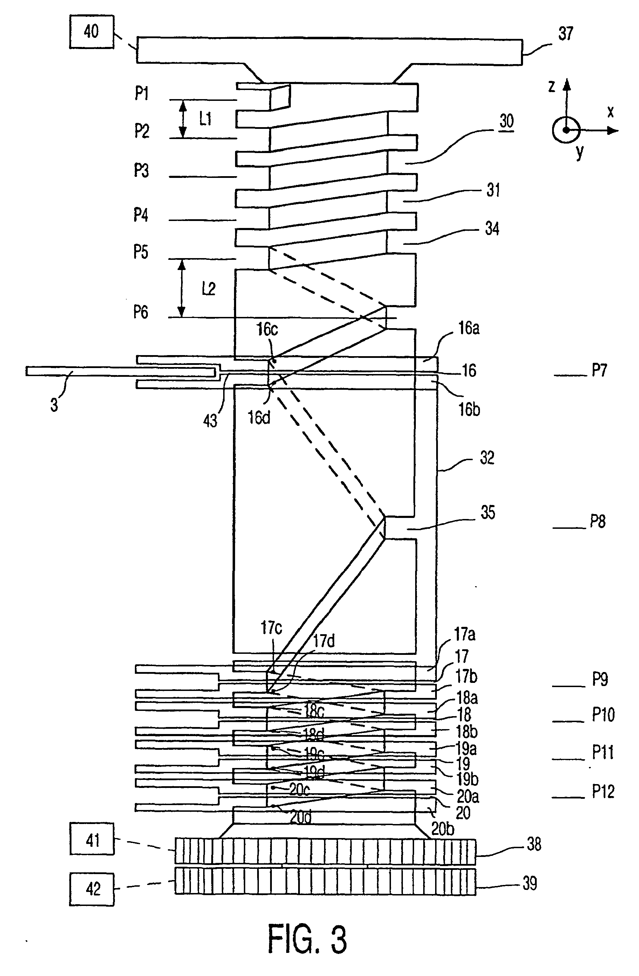

Fig. 2 zeigt eine Seitenansicht der drei Spindeln 30 gemäß Fig. 1, wobei die Ablagefächer 16 bis 20 nicht dargestellt sind. Die Spindeln 30 weisen ein erstes Spindelteil 31, ein zweites Spindelteil 32 und ein drittes Spindelteil 33 auf. Das erste Spindelteil 31 weist ein Außengewinde 34, das zweite Spindelteil 32 ein Außengewinde 35 und das dritte Spindelteil 33 ein Außengewinde 36 auf. Das erste Spindelteil 31 ist mit einem ersten Stirnrad 37 gekoppelt, das zweite Spindelteil 32 ist mit einem zweiten Stirnrad 38 gekoppelt und das dritte Spindelteil 33 ist mit einem dritten Stirnrad 39 gekoppelt. Das erste Stirnrad 37 ist mittels eines ersten Antriebsmechanismus 40 rotierend antreibbar, das zweite Stirnrad 38 ist mittels eines zweiten Antriebsmechanismus 41 rotierend antreibbar und das dritte Stirnrad 39 ist mittels eines dritten Antriebsmechanismus 42 rotierend antreibbar. Der erste Antriebsmechanismus 40, der zweite Antriebsmechanismus 41 und der dritte Antriebsmechanismus 42 können beispielsweise mittels herkömmlicher Motoren realisiert werden. Der erste Antriebsmechanismus 40, der zweite Antriebsmechanismus 41 und der dritte Antriebsmechanismus 42 sind jeweils für den Antrieb in zwei Richtungen vorgesehen. Das Außengewinde 34 des ersten Spindelteils 31 weist in einem oberen Abschnitt eine Steigung L1 und in einem unteren Abschnitt eine Steigung L2 auf. Das Außengewinde 35 des zweiten Spindelteils 32 weist eine Steigung L3, welche größer als die Steigung L2 und größer als die Steigung L1 ist. Das Außengewinde 36 des dritten Spindelteils 33 weist eine Steigung L1 auf, welche der Steigung L1 des Außengewindels 43 des ersten Spindelteils 31 entspricht. Das erste Spindelteil 31 ist von dem zweiten Spindelteil 32 mittels einer ersten Trennebene 43 getrennt und das zweite Spindelteil 32 ist von dem dritten Spindelteil 33 mittels einer zweiten Trennebene 44 getrennt. Mittels des ersten Antriebsmechanismus 40 des zweiten Antriebsmechanismus 41 und des dritten Antriebmechanismus 42 sind das erste Spindelteil 31, das zweite Spindelteil 32 und das dritte Spindelteil 33 sowohl gemeinsam in derselben Richtung rotierbar als auch relativ zueinander rotierbar. Eine Rotation der Spindelteile 31 bis 33 relativ zueinander kann dabei sowohl dadurch erfolgen, daß die Spindelteile jeweils in entgegengesetzter Richtung rotiert werden als auch dadurch, daß eines oder zwei der Spindelteile 31 bis 33 fest stehen, während eines oder zwei der anderen Spindelteile 31 bis 33 rotieren. Werden die Spindelteile 31 bis 33 in einer gemeinsamen Richtung rotiert, so werden diese derart miteinander gekoppelt, daß die Außengewinde 34 bis 36 ein durchgehendes Gewinde bilden. Dies ist mittels Koppelmechanismen im Bereich der ersten Trennebene 43 und der zweiten Trennebene 44 realisierbar, mittels derer die Spindelteile 31 bis 33 beispielsweise formschlüssig koppelbar und entkoppelbar sind. Alternativ oder zusätzlich können der erste Antriebsmechanismus 40, der zweite Antriebsmechanismus 41 und der dritte Antriebsmechanismus 42 gekoppelt werden, um eine gleichmäßige Rotation zu ermöglichen. Mittels Rotation der Spindelteile 31 bis 33 können in der Fig. 2 nicht dargestellte Ablagefächer, welche mit den Außengewinden 34 bis 36 gekoppelt sind, in die vertikalen Positionen P 1 bis P12 überführt werden. Dies wird anhand der Fig. 3 näher erläutert. Die Fig. 3 zeigt die Spindel 30 gemäß Fig. 2 in Seitenansicht, wobei zusätzlich fünf Ablagefächer 16 bis 20 dargestellt sind, welche zur Ablage und Lagerung von Informationsplatten vorgesehen sind. Das Ablagefach 16 befindet sich in der Position P7, das Ablagefach 17 in der Position P9, das Ablagefach 18 in der Position P10, das Ablagefach 19 in der Position P11 und das Ablagefach 20 in der Position P 12. Die Ablagefächer 16 bis 20 sind jeweils zweiteilig ausgebildet und weisen jeweils Deckelteile 16a bis 20a und Bodenteile 16b bis 20b auf. Die Deckelteile 16a bis 20a weisen schematisch dargestellte Mitnehmerelemente 16c bis 20c auf, welche in die Außengewinde 34 bis 36 der Spindelteile 31 bis 33 eingreifen. Die Bodenteile 16b bis 20b weisen schematisch dargestellte Mitnehmerelemente 16d bis 20d auf, welche ebenfalls in die Außengewinde 34 bis 36 der Spindelteile 31 bis 33 eingreifen. Bei Rotation der Spindelteile 31 bis 33 werden die Mitnehmerelemente 16c bis 20c sowie 16d bis 20d von den Außengewinden 34 bis 36 geführt und mitgenommen, wodurch die Deckelteile 16a bis 20a und die Bodenteile 16b bis 20b je nach Rotationsrichtung in oder entgegen der vertikalen z-Richtung transportiert werden. In der Fig. 3 weist das sich in der Position P 7 befindliche Ablagefach 16 die Informationsplatte 3 auf.

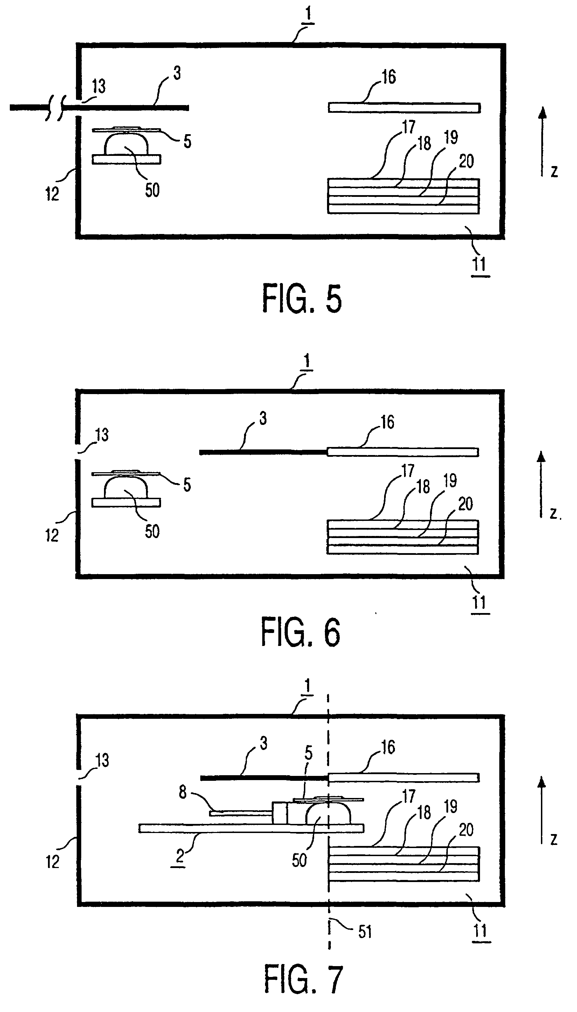

Fig. 5 zeigt das Wechsler-Gerät gemäß Fig. 1 in schematischer Seitenansicht. Die Informationsplatte 3 befindet sich in der Auswurfposition, in der sie von der Hand einer Bedienperson entnommen werden kann. Das Ablagefach 16 befindet sich in einer Ladeposition 17, welche der Position P6 gemäß Fig. 3 entspricht. Die Ablagefächer 17 bis 20 befinden sich in den Positonen P9 bis P12 gemäß Fig. 3. Der Plattenteller 5 der Lese/Schreibeinheit 2, welcher von einem Plattenteller 50 rotierend antreibbar ist, befindet sich in einer Nischenposition.

Fig. 6 zeigt das Wechsler-Gerät gemäß Fig. 5, wobei die Informationsplatte 3 von der Auswurfposition in das sich in der Ladeposition befindliche Ablagefach 16 transportiert worden ist. Für den Transport der Informationsplatte 3 von der Auswurfposition in die Ladeposition sind das linke Transportelement 14 und das rechte Transportelement 15 gemäß Fig. 1 vorgesehen.

Fig. 7 zeigt das Wechsler-Gerät 1 gemäß Fig. 6, wobei die Lese/Schreibeinheit 2 in die Stapeleinheit 11 eingeschwenkt worden ist. Das Einschwenken erfolgt mittels eines nicht näher dargestellten Antriebsmechanismus um die Schwenkachse 4 gemäß Fig. 1. In der Fig. 7 befindet sich der Mittelpunkt des Plattentellers 5 der Lese/Schreibeinheit zentrisch ausgerichtet zu dem Mittelpunkt der Informationsplatte 3. Der Mittelpunkt des Plattentellers 5 und der Mittelpunkt der Informationsplatte 3 liegen auf einer in der vertikalen z-Richtung verlaufenden Stapellinie 51. Informationsplatten, die sich in einem der Ablagefächer 16 bis 20 befinden, können mittels der Spindeln 30 gemäß Fig. 3 entlang der Stapellinie 51 in der vertikalen z-Richtung transportiert werden.

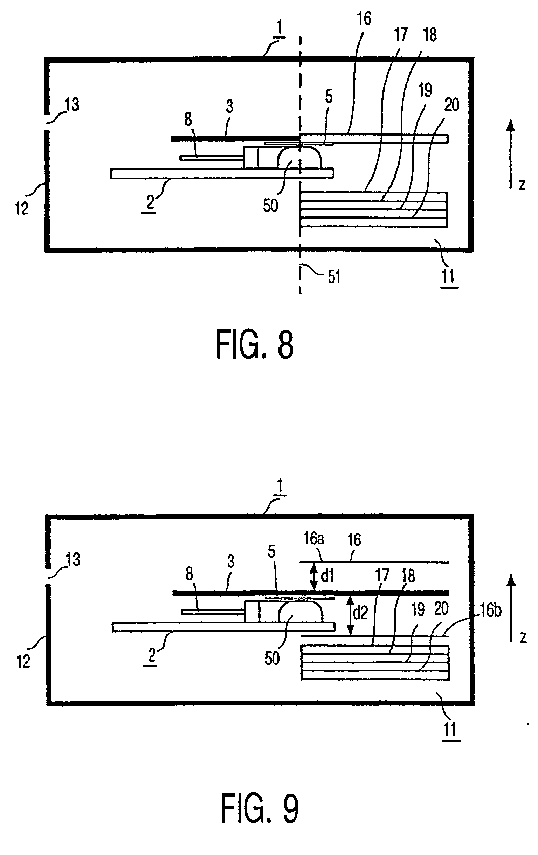

Fig. 8 zeigt das Wechsler-Gerät 1 in Seitenansicht gemäß Fig. 7, wobei das Ablagefach 16 mit der Informationsplatte 3 in der negativen z-Richtung entlang der Stapellinie 51 in Richtung auf den Plattenteller 5 bewegt worden ist und auf dem Plattenteller 5 festgeklemmt worden ist.

Fig. 9 zeigt das Wechsler-Gerät 1 in einer Spielposition, in der mittels der Lese/Schreibeinheit 2 auf der Informationsplatte 3 gespeicherte Informationen ausgelesen werden können oder Informationen auf die Informationsplatte 3 eingeschrieben werden können. In der Fig. 9 ist das Deckelteil 16a des Ablagefaches 16 um die Distanz d₁ in der positiven z-Richtung von der Informationsplatte 3 beabstandet und das Bodenteil 16b des Ablagefaches 16 ist um die Distanz d₂ von der Informationsplatte 3 beabstandet. Ausgehend von der Fig. 8 erfolgte dies durch Verfahren des Deckelteils 16a in der positiven z-Richtung und durch Verfahren des Bodenteils 16b in der negativen z-Richtung, wobei die Informationsplatte 3 auf dem Plattenteller 5 der Lese/Schreibeinheit 2 verblieben ist. Die Distanzen d₁ und d₂ gewährleisten, daß die auf der Informationsplatte 3 gespeicherten Informationen auch bei Erschütterungen des Wechsler-Gerätes 1 fehlerfrei ausgelesen werden können und es nicht zu einem etwaigen Anschlag der rotierenden Inforrnationsplatte 3 an das Deckelteil 16a oder das Bodenteil 16b kommt. Dies ist insbesondere für einen Einsatz des Wechsler-Gerätes 1 in Kraftfahrzeugen vorteilhaft, um auch bei den im Betrieb auftretenden Vibrationen ein fehlerfreies Abspielen der Informationsplatte 3 zu gewährleisten.

Die Fig. 3 zeigt die zu Fig. 8 korrespondierende Darstellung der Spindeln 30 zusammen mit den Ablagefächern 16 bis 20.
Die Position des Ablagefaches 16 und der Informationsplatte 3 gemäß Fig. 8 entspricht der vertikalen Position P7 gemäß Fig. 3.

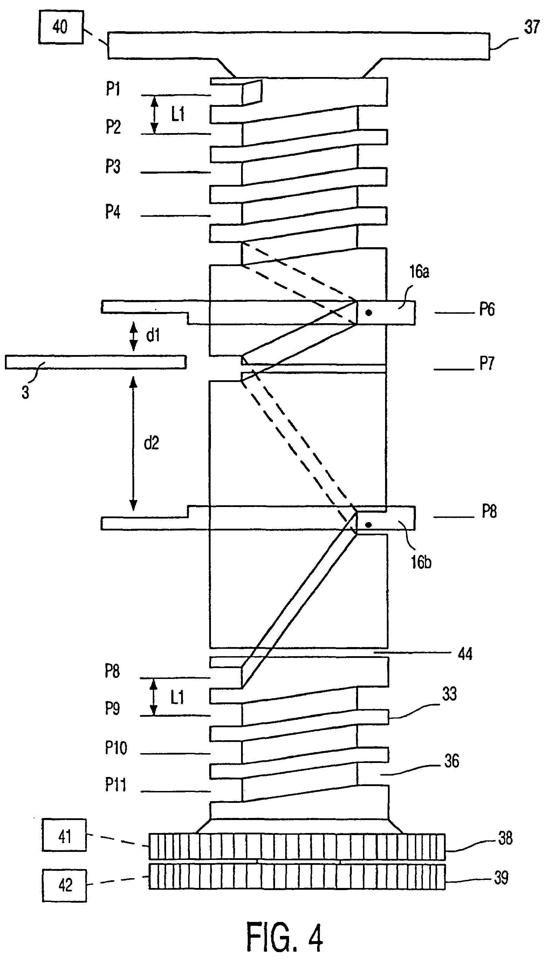

Fig. 4 zeigt die zu Fig. 9 korrespondierende Darstellung der Spindeln 30 und des Deckelteils 16a sowie des Bodenteils 16b des Ablagefaches 16. Die Ablagefächer 17 bis 20 sind in der Fig. 4 aus Gründen der Übersichtlichkeit weggelassen.

In der Fig. 3 befindet sich das Ablagefach 16 in der ersten Trennebene 43. In dieser Trennebene 43 ist das Mitnehmerelement 16c des Deckelteils 16a des Ablagefaches 16 mit dem ersten Spindelteil 31 gekoppelt und das Mitnehmerelement 16d des Bodenteiles 16b des Ablagefaches 16 ist mit dem zweiten Spindelteil 32 gekoppelt. Um Platz zum Abspielen der Informationsplatte 3 zu schaffen, werden ausgehend von der in der Fig. 3 dargestellten Position das erste Spindelteil 31 und das zweite Spindelteil 32 in entgegengesetzter Richtung rotiert, wodurch das Deckelteil 16a entlang des Außengewindes 34 in die Positon P6 überführt wird und das Bodenteil 16b entlang des Außengewindes 35 in die Position P8. Dies ist in der Fig. 4 dargestellt. Zwischen der Informationsplatte 3 und dem Deckelteil 16a ist dadurch eine Distanz d₁ entstanden und zwischen der Informationsplatte 3 und dem Bodenteil 16b eine Distanz d₂.

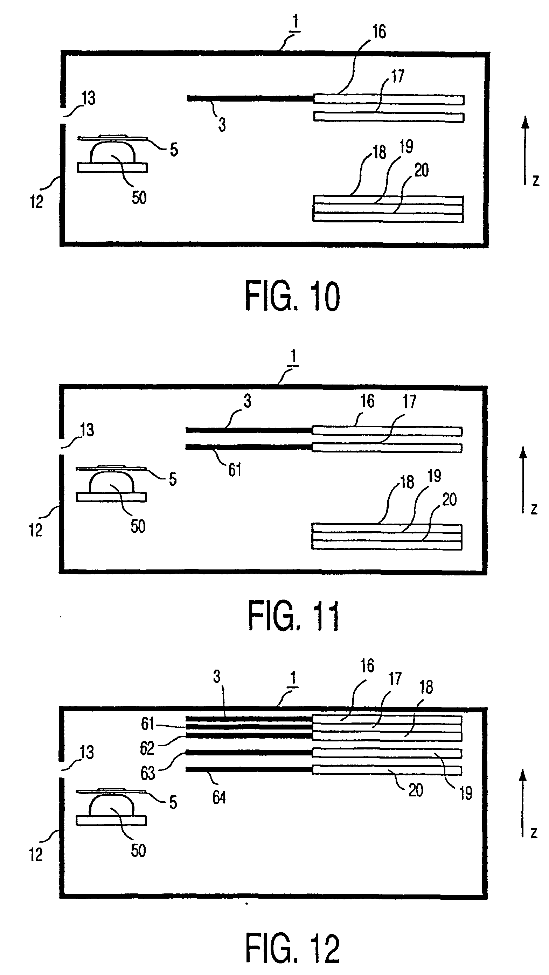

Um die Informationsplatte 3 nach dem Abspielen aus der in der Fig. 4 dargestellten Spielposition zu entfernen, werden das Deckelteil 16a und das Bodenteil 16b mittels entgegengesetzter Rotation des ersten Spindelteils 31 und des zweiten Spindelteils 32 wieder zurück in die in Fig. 3 dargestellte Position P7 überführt. Ausgehend von dieser Position P7 kann die Informationsplatte 3 durch gleichsinnige Rotation des ersten Spindelteils 31 und des zweiten Spindelteils 32 dann beispielsweise in die Stapelposition P1 überführt werden. Bei der gleichsinnige Rotation des ersten Spindelteils 31 und des zweiten Spindelteils 32 bilden die Außengewinde 35 und 34 ein durchgehendes Gewinde und das Deckelteil 16a und das Bodenteil 16b werden ebenfalls gleichsinnig in der positiven z-Richtung in Richtung auf die Stapelposition P1 transportiert, wobei sie die Informationsplatte 3 führen. Vorzugsweise wird das dritte Spindelteil 33 hierbei nicht rotiert, so daß die Ablagefächer 17 bis 20 in den in der Fig. 3 dargestellten Postionen verbleiben. In der Fig. 10 befindet sich das Ablagefach 16 mit der Informationsplatte 3 in der Stapelposition P5 gemäß Fig. 3. Ausgehend von der Fig. 3 ist das Ablagefach 16 mittels gleichsinniger Rotation des ersten Spindelteils 31 und des zweiten Spindelteils 32 von der in der Fig. 3 dargestellten Position P7 in die Position P5 überführt worden. Das Ablagefach 17 befindet sich in der Fig. 10 in der Ladeposition P6. Um das Ablagefach 17 von der in der Fig. 3 dargestellten Postion P9 in die Position P6 zu überführen, wird zunächst das dritte Spindelteil 33 rotiert, bis die Mitnehmer 17c und 17d des Ablagefaches 17 in den Eingriffsbereich des Außengewindes 35 des zweiten Spindelteiles 32 gelangen. Danach wird vorzugsweise die Rotation des dritten Spindelteils 33 gestoppt und nur das zweite Spindelteil 32 und das erste Spindelteil 31 werden gleichsinnig rotiert, so daß die Außengewinde 35 und 34 ein durchgehendes Gewinde bilden und das Ablagefach 17 in die Positon P6 überführt wird, wobei die Mitnehmerelemente 17c und 17d in den Außengewinden 35 und 34 geführt werden.

Fig. 11 zeigt in Seitenansicht das Wechsler-Gerät 1 gemäß Fig. 10, wobei eine zweite Informationsplatte 61 von der Auswurfposition in das Ablagefach 17 mittels des in der Fig. 1 dargestellten linken Transportelementes 14 und des rechten Transportelementes 15 transportiert worden ist.

Fig. 12 zeigt schließlich das Wechsler-Gerät 1 mit den Ablagefächern 16 bis 20, die sich in den Positionen P2 bis P6 gemäß Fig. 3 befinden, wobei das Ablagefach 16 die Informa tionsplatte 3, das Ablagefach 17 eine Informationsplatte 61, das Ablagefach 18 eine Informationsplatte 62, das Ablagefach 19 eine Informationsplatte 63 und das Ablagefach 20 eine Informationsplatte 64 lagern. Ausgehend von den in dieser Fig. 12 dargestellten Positionen kann die sich in dem Ablagefach 20 befindliche Infomationsplatte 64 in die Spielposition P7 überführt werden.

## Patentansprüche

1. Wechsler-Gerät für Informationsplatten (3) mit einer Lese/Schreibeinheit (2) zum Lesen von auf einer Informationsplatte (3) gespeicherten Informationen und/oder zum Schreiben von Informationen auf eine Informationsplatte (3) und mit einer Stapeleinheit (11) zum Stapeln von wenigstens zwei Informationsplatten (3) in wenigstens zwei Stapelpositionen, wobei die Stapeleinheit (11) Ablagefächer (16-20) zur Ablage der Informationsplatten (3) in Ablageebenen und einen ersten Transportmechanismus (30) zum Transport der Ablagefächer (16-20) in die Stapelpositionen aufweist, wobei die Ablagefächer (16-20) jeweils zweiteilig ausgebildet sind mit einem Deckelteil (16a-20a) und einem Bodenteil (16b-20b), und wobei zum Transport der Informationsplatten (3) innerhalb der Stapeleinheit (11) die Deckelteile (16a-20a) und die Bodenteile (16b-20b) der Ablagefächer (16-20) mittels des ersten Transportmechanismus (30) gemeinsam in derselben Richtung verfahrbar sind, **dadurch gekennzeichnet, daß** zum Überführen einer Informationsplatte (3) in eine zum Abspielen und/oder Beschreiben der Informationsplatte (3) vorgesehene Spielposition das Deckelteil (16a-20a) und das Bodenteil (16b-20b) des diese Informationsplatte (3) lagernden Ablagefaches (16-20) mittels des ersten Transportmechanismus (30) relativ zueinander verfahrbar sind.

2. Gerät nach Anspruch 1, **dadurch gekennzeichnet,**
**daß** der erste Transportmechanismus (30) zum Transport der Ablagefächer (16-20) entlang einer geneigt, insbesondere senkrecht, zu den Ablageebenen verlaufenden Stapellinie (51) vorgesehen ist.

3. Gerät nach Anspruch 2, **dadurch gekennzeichnet,**
**daß** die Spielposition auf der Stapellinie (51) liegt und daß ein zweiter Transportmechanismus (52) vorgesehen ist zum Transport der Lese/Schreibeinheit (2) von einer Nischenposition in die Spielposition.

4. Gerät nach Anspruch 3, **dadurch gekennzeichnet,**
**daß** der erste Transportmechanismus (30) vorgesehen ist zum Aufbringen einer Informationsplatte auf einen Plattenteller (5) der Lese/Schreibeinheit (2).

5. Gerät nach Anspruch 3, **dadurch gekennzeichnet,**
**daß** die Lese/Schreibeinheit (2) vorgesehen ist zum Drücken und/oder Klemmen einer Informationsplatte (3) auf einen Plattenteller (5) der Lese/Schreibeinheit (2).

6. Gerät nach Anspruch 2, **dadurch gekennzeichnet,**
**daß** das Gerät eine Auswurfposition aufweist, in der jeweils eine Informationsplatte (3) aus dem Gerät entnehmbar ist und daß ein dritter Transportmechanismus (14, 15) vorgesehen ist zum Transport einer Informationsplatte (3) aus einem sich in einer Ladeposition der Stapeleinheit (11) befindlichen Ablagefach (16-20) in die Auswurfposition, wobei die Ladeposition auf der Stapellinie (51) liegt.

7. Gerät nach Anspruch 6, **dadurch gekennzeichnet,**
**daß** die Spielposition seitlich versetzt zu der Stapellinie (51) liegt und daß der dritte Transportmechanismus (14, 15) vorgesehen ist zum Transport einer zum Abspielen vorgesehenen Informationsplatte (3) aus einem sich in der Ladeposition befindlichen Ablagefach (16-20) in die Spielposition.

8. Gerät nach Anspruch 2, **dadurch gekennzeichnet,**
**daß** die Spielposition seitlich versetzt zu der Stapellinie (51) liegt, daß ein vierter Transportmechanismus (52) vorgesehen ist zum Überführen der Lese/Schreibeinheit (2) von einer Nischenposition in die Ladeposition, daß die Lese/Schreibeinheit (2) zur Übernahme der Informationsplatte (3) aus einem sich in der Ladeposition befindichen Ablagefach (16-20) und zum Transport dieser Informationsplatte (3) aus der Stapelposition in die Spielposition vorgesehen ist.

9. Gerät nach Anspruch 1, ***dadurch gekennzeichnet,***
**daß** die Deckelteile (16a-20) und die Bodenteile (16b-20b) der Ablagefächer (16-20) mit wenigstens einer ein Gewinde (34, 35, 36) aufweisenden Spindel (30) gekoppelt sind, daß die Deckelteile (16a-20a) und die Bodenteile (16b-20b) der Ablagefächer (16-20) mittels Rotation der Spindel (30) bewegbar sind, daß die Spindel (30) wenigstens zweiteilig ausgebildet ist mit einem ersten Spindelteil (31) und einem zweiten Spindelteil (32), daß zum Transport der Informationsplatten (3) innerhalb der Stapeleinheit (11) das erste Spindelteil (31) und das zweite Spindelteil (32) in einer gemeinsamen Richtung rotierbar sind und daß zum Überführen einer Informationsplatte (3) in die Spielposition das erste (31) und das zweite (32) Spindelteil relativ zueinander rotierbar sind, wobei das erste Spindelteil (31) zur Bewegung des Deckelteils (16a-20a) und das zweite Spindelteil (32) zur Bewegung des Bodenteils (16b-20b) des diese Informationsplatte (3) lagernden Ablagefaches (16-20) vorgesehen sind.

10. Gerät nach Anspruch 9, **dadurch gekennzeichnet,**
**daß** die Spindel (30) eine das erste (31) und das zweite (32) Spindelteil trennende Trennebene (43) aufweist, daß zum Überführen einer Informationsplatte (3) in die Spielposition in einem ersten Schritt das zugeordnete Ablagefach (16-20) mittels gleichsinniger Rotation des ersten (31) und des zweiten (32) Spindelteils in die Trennebene (43) überführbar ist und daß in einem zweiten Schritt mittels relativ zueinander erfolgender Rotation des ersten (31) und des zweiten (32) Spindelteils das Deckelteil (16a-20a) und das Bodenteil (16b-20b) des Ablagefaches (16-20) relativ zueinander verfahrbar sind.

11. Gerät nach Anspruch 6 und 9, **dadurch gekennzeichnet,**
**daß** ein oberer und ein unterer Stapelbereich der Stapeleinheit (11) zur Stapelung der Ablagefächer (16-20) vorgesehen ist, daß die Ladeposition in einem Mittelbereich zwischen dem oberen und dem unteren Stapelbereich vorgesehen ist und daß jeweils eines der Ablagefächer (16-20) mittels Rotation der Spindel (30) in die Ladeposition überführbar ist. 12. Fahrzeug mit einem Gerät nach Anspruch 1.

## Claims

1. A changer apparatus for information discs (3) with a read/write unit (2) for reading information stored on an information disc (3) and/or writing information onto an information disc (3), and with a stacking unit (11) for stacking at least two information discs (3) in at least two stacking positions, the stacking unit (11) having holding trays (16-20) for holding the information discs (3) in holding planes and a first transport mechanism (30) for moving the holding trays (16-20) into the stacking positions, wherein the holding trays (16-20) each have two parts, i.e. a top part (16a-20a) and a bottom part (16b-20b), and wherein the top parts (16a-20a) and the bottom parts (16b-20b) of the holding trays (16-20) are jointly movable in the same direction by means of the first transport mechanism (30) for the transport of the information discs (3) inside the stacking unit (11), **characterized in that** the top part (16a-20a) and the bottom part (16b-20b) of the holding tray (16-20) holding an information disc (3) to be read and/or inscribed are movable with respect to one another by means of the first transport mechanism (30) in order to bring this information disc (3) into a play position intended for reading and/or inscribing it.

2. An apparatus as claimed in Claim 1, **characterized in that**
the first transport mechanism (30) is adapted to move the holding trays (16-20) along a stacking line (51) which is oriented at an angle to, in particular perpendicularly to the holding planes.

3. An apparatus as claimed in Claim 2, **characterized in that**
the play position is situated on the stacking line (51), and **in that** a second transport mechanism (52) has been provided for moving the read/write unit (2) from a standby position into the play position.

4. An apparatus as claimed in Claim 3, **characterized in that**
the first transport mechanism (30) is adapted to position an information disc onto a turntable (5) of the read/write unit (2).

5. An apparatus as claimed in Claim 3, **characterized in that**
the read/write unit (2) is adapted to press and/or clamp an information disc (3) onto a turntable (5) of the read/write unit (2).

6. An apparatus as claimed in Claim 2, **characterized in that**
the apparatus has an eject position in which an information disc (3) can be removed from the apparatus, and **in that** a third transport mechanism (14, 15) has been provided for moving an information disc (3) from a holding tray (16-20), which is in a loading position of the stacking unit (11), into the eject position, the loading position being situated on the stacking line (51).

7. An apparatus as claimed in Claim 6, **characterized in that**
the play position is laterally offset with respect to the stacking line (51), and **in that** the third transport mechanism (14, 15) is adapted to move an information disc (3) to be played from the holding tray (16-20), which is in the loading position, into the play position.

8. An apparatus as claimed in Claim 2, **characterized in that**
the play position is laterally offset with respect to the stacking line (51), **in that** a fourth transport mechanism (52) has been provided for moving the read/write unit (2) from a standby position into the loading position, and **in that** the read/write unit (2) is adapted to take the information disc (3) from a holding tray (16-20) which is in the loading position and to move this information disc (3) from the stacking position into the play position.

9. An apparatus as claimed in Claim 1, **characterized in that**
the top parts (16a-20a) and the bottom parts (16b-20b) of the holding trays (16-20) are coupled to spindles (30) having at least one screwthread (34, 35, 36), **in that** the top parts (16a-20a) and the bottom parts (16b-20b) of the holding trays (16-20) are movable by rotation of the spindles (30), **in that** the spindles (30) have at least two sections with a first spindle section (3 1 ) and a second spindle section (32), **in that** the first spindle section (31) and the second spindle section (32) are rotatable in one common direction for moving the information discs (3) inside the stacking unit (11), and **in that** the first spindle section (31) and the second spindle section (32) are rotatable with respect to one another for moving an information disc (3) into the play position, the first spindle section (31) being adapted to move the top part (16a-20a) and the second spindle section (32) being adapted to move the bottom part (16b-20b) of the holding tray (16-20) which holds this information disc (3).

10. An apparatus as claimed in Claim 9, **characterized in that**
the spindle (30) has a separating plane (43) which divides the first spindle section (31) and the second spindle section (32), **in that** the respective holding tray (16-20) is movable into the separating plane (43) by rotation of the first spindle section (31) and the second spindle section (32) in the same direction in order to move an information disc (3) into the play position in a first step, and **in that** in a second step the top part (16a-20a) and the bottom part (16b-20b) of the holding tray (16-20) are movable relative to one another by rotation of the first spindle section (31) and the second spindle section (32) relative to one another.

11. An apparatus as claimed in Claims 6 and 9, **characterized in that**
the stacking unit (11) has an upper and a lower stacking area for stacking the holding trays (16-20), **in that** the loading position is situated in a central area between the upper and the lower stacking area, and **in that** one of the holding trays (16-20) can be moved into the loading position by rotation of the spindles (30).

12. A vehicle including an apparatus as claimed in Claim 1.

## Revendications

1. Changeur pour disques d'information (3) avec une unité de lecture/écriture (2) pour la lecture d'informations enregistrées sur un disque d'information (3) et pour l'écriture d'informations sur un disque d'information (3) et avec une unité d'empilage (11) pour l'empilage d'au moins deux disques d'information (3) dans au moins deux positions d'empilage, l'unité d'empilage (11) présentant des tiroirs de réception (16-20) pour le stockage des disques d'information (3) dans des plans de réception et un premier mécanisme de transport (30) pour le transport des tiroirs de réception (16-20) dans les positions d'empilage, les tiroirs de réception (16-20) étant respectivement conçus en deux parties avec une pièce de couvercle (16a-20a) et une pièce de fond (16b-20b) et les pièces de couvercle (16a-20a) et les pièces de fond (16b-20b) des tiroirs de réception (16-20) étant déplaçables ensemble dans la même direction à l'aide du premier mécanisme de transport (30) en vue du transport des disques d'information (3), **caractérisé en ce que**, pour le transport d'un disque d'information (3) dans une position de lecture prévue pour la lecture et/ou l'écriture du disque d'information (3), la pièce de couvercle (16a-20a) et la pièce de fond (16b-20b) du tiroir de réception (16-20) logeant ce disque d'information (3) étant déplaçables l'un par rapport à l'autre à l'aide du premier mécanisme de transport (30).

2. Appareil selon la revendication 1, **caractérisé en ce que** le premier mécanisme de transport (30) est prévu pour le transport des tiroirs de réception (16-20) le long d'une ligne d'empilage (51) inclinée, en particulier perpendiculaire aux plans de réception.

3. Appareil selon la revendication 2, **caractérisé en ce que** la position de lecture se trouve sur la ligne d'empilage (51) et qu'il est prévu un deuxième mécanisme de transport (52) pour le transport de l'unité de lecture/écriture (2) d'une position de logement dans une position de lecture.

4. Appareil selon la revendication 3, **caractérisé en ce que** le premier mécanisme de transport (30) est prévu pour l'application d'un disque d'information sur un plateau (5) de l'unité de lecture/écriture (2).

5. Appareil selon la revendication 3, **caractérisé en ce que** l'unité de lecture/écriture (2) est prévue pour presser et/ou serrer un disque d'information (3) sur un plateau (5) de l'unité de lecture/écriture (2).

6. Appareil selon la revendication 2, **caractérisé en ce que** l'appareil présente une position d'éjection dans laquelle un disque d'information.(3) peut respectivement être enlevé de l'appareil et qu'il est prévu un troisième mécanisme de transport (14, 15) pour le transport d'un disque d'information (3) d'un tiroir de réception (16-20) se trouvant dans une position de chargement de l'unité d'empilage (11) dans la position d'éjection, la position de chargement se trouvant sur la ligne d'empilage (51).

7. Appareil selon la revendication 6, **caractérisé en ce que** la position de lecture se trouve décalée latéralement vers la ligne d'empilage (51) et que le troisième mécanisme de transport (14, 15) est prévu pour le transport d'un disque d'information (3) prévu pour la lecture d'un tiroir de réception (16-20) se trouvant dans la position de chargement dans la position de lecture.

8. Appareil selon la revendication 2, **caractérisé en ce que** la position de lecture se trouve décalée latéralement de la ligne d'empilage (51), qu'il est prévu un quatrième mécanisme de transport (52) pour le transfert de l'unité de lecture/écriture (2) d'une position de rangement dans la position de rangement, que l'unité de lecture/écriture (2) est prévue pour la prise en charge du disque d'information (3) à partir d'un tiroir de réception (16-20) se trouvant dans la position de chargement et pour le transport de ce disque d'information (3) de la position d'empilage dans la position de lecture.

9. Appareil selon la revendication 1, **caractérisé en ce que** les pièces de couvercle (16a-20) et les pièces de fond (16b-20b) des tiroirs de réception (16-20) sont couplées avec au moins une broche (30) présentant un filet (34, 35, 36), que les pièces de couvercle (16a-20a) et les pièces de fond (16b-20b) des tiroirs de réception (16-20) sont déplaçables à l'aide de la rotation de la broche (30), que la broche (30) est conçue au moins en deux parties avec une première pièce de broche (31) et une deuxième pièce de broche (32) que, pour le transport des disques d'information (3) à l'intérieur de l'unité d'empilage (11), la première pièce de broche (31) et la deuxième pièce de broche (32) peuvent tourner dans une direction commune et que, pour le transfert d'un disque d'information (3) dans la position de lecture, les première (31) et deuxième (32) pièces de broche peuvent tourner l'une par rapport à l'autre, la première pièce de broche (31) étant prévue pour le déplacement de la pièce de couvercle (16a-20a) et la deuxième pièce de broche (32) pour le déplacement de la pièce de fond (16b-20b) du tiroir de réception (16-20) logeant ce disque d'information (3).

10. Appareil selon la revendication 9, **caractérisé en ce que** la broche (30) présente un plan de séparation (43) séparant les première (31) et deuxième (32) pièces de broche, que, pour le transfert d'un disque d'information (31) dans la position de lecture, le tiroir de réception (16-20) affecté peut être transféré dans une première étape dans le plan de séparation (43) à l'aide de la rotation dans le même sens des première (31) et deuxième (32) pièces de broche et que, dans une deuxième étape, la pièce de couvercle (16a-20a) et la pièce de fond (16b-20b) du tiroir de réception (16-20) sont déplaçables l'une par rapport à l'autre à l'aide de la rotation des première (31) et deuxième (32) pièces de broche l'une par rapport à l'autre.

11. Appareil selon l'une des revendications 6 et 9, **caractérisé en ce qu'**une zone d'empilage supérieure et une zone d'empilage inférieure de l'unité d'empilage (11) sont prévues pour l'empilage des tiroirs de réception (16-20), que la position de chargement est prévue dans une zone centrale entre les zones d'empilage supérieure et inférieure et qu'un des tiroirs de réception (16-20) peut respectivement être transféré à l'aide de la rotation de la broche (30) dans la position de chargement.

12. Véhicule avec un appareil selon la revendication 1.
